# FASCICULE DE BREVET EUROPEEN

(11) **EP 2 954 449 B1**
(45) Date de publication et mention de la délivrance du brevet: **29.11.2023**
(21) Numéro de dépôt: 14703103.3
(22) Date de dépôt: 07.02.2014
(51) Int. Cl.: G06F 21/16, G06F 21/36, H04N 1/32, G06F 21/64, H04N 1/00, G06F 16/2457, G07C 9/35

(54) **AUTHENTIFICATION DE SIGNATURE MANUSCRITE NUMÉRISÉE**
AUTHENTIFIZIERUNG EINER DIGITALISIERTEN HANDSCHRIFTLICHEN SIGNATUR
DIGITISED HANDWRITTEN SIGNATURE AUTHENTICATION

(30) Priorité: 08.02.2013 FR 1351087
(43) Date de publication de la demande: 16.12.2015
(73) Titulaire: Banks and Acquirers International Holding, 75015 Paris (FR)
(72) Inventeur: CECE, Philippe, F-90350 Evette-Salbert (FR)
(74) Mandataire: LLR
(86) Numéro de dépôt international: PCT/EP2014/052498
(87) Numéro de publication internationale: WO 2014/122297

(56) Documents cités:
- WO-A1-2010/037407
- WO-A1-2010/037407
- CA-C- 2 483 419
- US-A1- 2005 132 196
- US-A1- 2009 212 104
- US-A1- 2011 231 666
- US-B1- 7 900 823
- US-B1- 7 934 098
- ANOOP M. NAMBOODIRI ET AL: "<title>Multimedia document authentication using on-line signatures as watermarks</title>", PROCEEDINGS OF SPIE, vol. 5306, 22 juin 2004 (2004-06-22), pages 653-662, XP055093141, ISSN: 0277-786X, DOI: 10.1117/12.531133
- KOMATSU N ET AL: "A PROPOSAL ON DIGITAL WATERMARK IN DOCUMENT IMAGE COMMUNICATION AND ITS APPLICATION TO REALIZING A SIGNATURE", ELECTRONICS & COMMUNICATIONS IN JAPAN, PART I - COMMUNICATIONS, WILEY, HOBOKEN, NJ, US, vol. 73, no. 5, PART 01, 1 mai 1990 (1990-05-01), pages 22-33, XP000159282, ISSN: 8756-6621, DOI: 10.1002/ECJA.4410730503

## Description

### 1. Domaine de l'invention

L'invention se rapporte au domaine de l'authentification. Plus particulièrement, l'invention se rapporte au domaine de l'authentification de signatures manuscrites.

### 2. Art Antérieur

Lors de certains actes de vente, de contractualisation ou d'abonnement, il est nécessaire que le souscripteur apporte une signature manuscrite. Afin de faciliter la gestion de ces documents, il est de plus en plus courant de dématérialiser, directement ou a posteriori, les documents ainsi que la signature, avec utilisation de données biométriques ou non, pour ne conserver qu'un support numérique.

Ainsi, d'un point de vue légal et souvent psychologique, il est toujours nécessaire de disposer d'une signature manuscrite sur un certain nombre de documents. Il y a donc un besoin de proposer une solution qui permette de respecter les exigences légales et de rassurer les utilisateurs soucieux de voir apparaître une signature manuscrite tout en assurant que cette signature respecte les dispositions de la directive 1999/93/CE.

On connaît, de l'art antérieur, des méthodes et des dispositifs qui permettent de saisir la signature d'un individu sur un support informatique. De tels dispositifs sont par exemple utilisés par des agents des services postaux ou par des transporteurs pour valider la réception, par un destinataire, d'un colis ou d'un pli remis en mains propre. L'utilisation de tels dispositifs de signatures permet de remplacer le récépissé papier par un récépissé électronique. Un tel récépissé électronique permet de simplifier la gestion des accusés de réception pour les organismes qui utilisent de telles méthodes. En revanche, pour ce qui est de la sécurité, les dispositifs existants ne sont pas performants. Ces dispositifs, en effet, ne sont pas faits pour prendre en compte des exigences légales d'authentification de signature. Au contraire, les dispositifs existants ont pour seule fonction la prise de signature et sa numérisation. L'objectif de ces dispositifs étant de remplacer la signature papier par une signature numérisée, une sécurisation de ces signatures n'est que rarement prise en compte.

A l'inverse, dans le domaine de la sécurisation des échanges électroniques (comme par exemple entre un client et un serveur), il existe de nombreux mécanismes assurant que l'information échangée est confidentielle. Ces mécanismes sont mis en oeuvre par l'intermédiaire de clés asymétriques ou de clés partagées. À partir de ces clés, l'information est échangée sous une forme cryptée. Bien entendu, il existe de nombreuses variations et de nombreuses méthodes permettant de s'assurer que seul le dépositaire d'une clé ou d'une paire de clé est à même de chiffrer ou de déchiffrer une information. Ces mécanismes permettent notamment de mettre en oeuvre une signature dite « numérique » (également appelée signature électronique) de documents. En règle générale, une signature numérique permet de garantir l'intégrité d'un document électronique et d'en authentifier l'auteur. Une signature numérique présente des caractéristiques qui permettent au lecteur d'un document d'identifier la personne ou l'organisme qui a apposé sa signature et qui garantissent que le document n'a pas été altéré entre l'instant où l'auteur l'a signé et le moment où le lecteur le consulte. Les caractéristiques à réunir pour qu'une signature numérique soit conforme aux attentes sont les suivantes : l'authenticité de l'identité du signataire, le caractère infalsifiable de la signature, l'impossibilité de réutiliser la signature pour un autre document, l'inaltérabilité du document signé et l'irrévocabilité de la signature.

Or, compte tenu de l'état de la technique, ces caractéristiques ne sont pas souvent réunies dans les dispositifs actuels de saisie de signature manuscrite. Ainsi, peu de dispositifs existants permettent une saisie de signature manuscrite répondant aux caractéristiques précédentes. Quelques systèmes existants se targuent de pouvoir fournir une signature manuscrite numérisée qui soit conforme à la Directive du Parlement européen et du Conseil du 13 décembre 1999 (1999/93/CE). Il s'agit par exemple de la société **Wacom^{™}.** Cependant, les systèmes existants, dont ceux de **Wacom^{™},** nécessitent l'utilisation d'un dispositif externe complémentaire (appelé « pad » de signature). Par ailleurs, comme cela est explicité par **Wacom^{™},** la communication avec le dispositif **Wacom^{™}** est contrôlable par l'intermédiaire d'un framework, qui est connu de tous et qui permet à tout le moins, de développer un logiciel malveillant pour l'accès au dispositif. Une faille de sécurité est donc présente dans les systèmes actuels. De plus, les solutions actuelles offrent un accès « en clair » aux données biométriques produites (ce sont les signatures des clients). Cela est contraire aux dispositions de la directive européenne 95/46/CE, qui stipule que de telles données biométriques ne doivent pas faire l'objet d'une diffusion incontrôlée. <<**3a>>**

### 3. Résumé de l'invention

L'invention ne présente pas ces problèmes de l'art antérieur. En effet, l'invention permet à la fois de fournir une signature manuscrite numérisée tout en garantissant les propriétés nécessaires à sa validation selon les exigences légales.

Plus particulièrement, l'invention se présente sous la forme d'un procédé de création de signature numérisée. Selon l'invention un tel procédé comprend :
- une étape de saisie d'une signature, délivrant une signature numérisée ;
- une étape d'obtention d'au moins une donnée relative à un contexte associé à ladite signature numérisée, comprenant une obtention d'une donnée aléatoire représentative d'un fond d'image aléatoire;
- une étape de combinaison de ladite signature numérisée et de ladite au moins une donnée de contexte, délivrant une signature contextualisée.

Ainsi, l'invention permet de combiner, en une seule signature, des éléments qui permettent d'identifier clairement l'objet de cette signature. L'objet de la signature est donc lié, de manière inaltérable, à la signature elle-même. Par ailleurs, comme l'image peut être imprimée, l'invention permet également de disposer d'une preuve physique de la signature de l'acte en plus d'une preuve numérique.

Selon l'invention, le procédé précédemment mentionné est mis en oeuvre au sein d'une enceinte sécurisée. Une telle enceinte sécurisée peut par exemple se présenter sous la forme d'un terminal sécurisé, comme un terminal de paiement, qui comprend un dispositif ou un mécanisme de numérisation de signature manuscrite.

Le document WO 2010/037407 A1 (STEPOVER ; GUENTHER ANDREAS) du 8 avril 2010 décrit une méthode de capture de signature manuscrite permettant de signer un document de manière biométrique et électronique. Le système (illustré dans la figure 1 et dans la figure 4) de signature de WO 2010/037407 comprend un ordinateur ayant un moniteur configuré pour afficher un document électronique à signer, et un dispositif de capture de signature ayant un deuxième moniteur. Le dispositif de capture de signature permet de capturer la signature et les données biométriques de la signature. En revanche, WO 2010/037407 ne permet pas d'assurer l'inviolabilité de la signature tout en conservant un aspect visuel à cette inviolabilité : plus particulièrement, aucun aléa n'est affiché dans WO 2010/037407.

Le document US 2005/132196 A1 (DIETL JOSEF [DE]) 16 juin 2005 se rapporte à la signature de documents électroniques. Dans un mode de réalisation, un hachage unidirectionnel est calculé pour un document électronique et un filigrane numérique représentant le hachage unidirectionnel est incorporé dans un document de signature. Sur la base d'une entrée utilisateur, le document de signature comportant le filigrane numérique intégré est modifié et le document électronique est associé au document de signature. Le document électronique et le document de signature constituent ensemble un document électronique signé. L'entrée utilisateur peut inclure des informations biométriques, telles qu'une signature manuscrite ou un enregistrement vocal. Pour plus de sécurité, le hachage unidirectionnel peut être chiffré avant qu'une représentation du hachage ne soit incorporée dans le document de signature. Ainsi, le document US 2005/132196 A1 décrit l'utilisation d'une image (document électronique), mais cette image est sélectionnée au hasard dans une banque d'image : il n'est pas possible de prévenir l'utilisation d'une même image à plusieurs reprises.

Selon une caractéristique particulière, l'étape d'obtention d'au moins une donnée relative à un contexte comprend au moins une étape d'obtention d'une donnée aléatoire.

La donnée aléatoire étant obtenue au moment de l'obtention des données de contexte, elle est également liée à l'acte. Dès lors, un attaquant souhaitant usurper la signature devra également retrouver cette donnée aléatoire, ce qui est très complexe.

Selon une caractéristique particulière, ladite étape d'obtention de ladite donnée aléatoire comprend au moins une étape de calcul d'une donnée représentative d'un fond d'image aléatoire.

Selon une caractéristique particulière, ladite étape de calcul de ladite donnée représentative d'un fond d'image aléatoire comprend une étape d'application, sur une image vierge, d'un bruit aléatoire.

Selon un mode de réalisation particulier ladite étape d'obtention de signature comprend en outre une étape d'obtention d'au moins une donnée biométrique dudit utilisateur.

Ainsi, cette donnée biométrique peut être utilisée dans le cadre de la création du contexte. L'étape d'obtention de signature comprend également une étape d'obtention d'une image numérisée et d'autres paramètres, comme par exemple la méthode employée pour réaliser la capture de signature.

Selon un mode de réalisation particulier, ledit procédé comprend en outre :
- une étape de calcul, à l'aide de ladite moins une donnée relative à un contexte et de ladite au moins une signature numérisée, d'au moins une donnée cachée ;
- une étape d'insertion, au sein de ladite signature contextualisée, de ladite au moins une donnée cachée.

La donnée biométrique précédemment obtenue peut selon un mode de réalisation particulier, être utilisée pour calculer la donnée cachée, rendant ainsi la falsification de la signature presque impossible.

Selon un mode de réalisation particulier, ladite étape d'insertion au sein de ladite signature contextualisée, de ladite au moins une donnée cachée, comprend une étape de calcul d'un tatouage numérique à partir de ladite au moins une donnée cachée et en ce que ladite étape d'insertion de ladite au moins une donnée cachée consiste en l'application, au sein ladite signature contextualisée, dudit tatouage numérique.

Selon un mode de réalisation particulier, ladite étape d'insertion au sein de ladite signature contextualisée consiste à insérer ladite au moins une donnée cachée, au sein de métadonnées de ladite signature contextualisée.

L'invention se rapporte également à un dispositif de création de signature numérisée contextualisée, représentative d'une signature effectuée par un utilisateur.

Selon l'invention, un tel dispositif comprend :
- des moyens d'obtention d'au moins une donnée relative à un contexte ;
- des moyens d'obtention d'une signature, délivrant une signature numérisée ;
- des moyens de combinaison de ladite signature numérisée et de ladite au moins une donnée de contexte, délivrant une signature contextualisée.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un exemple de signature contextualisée au sens de l'invention ;
- la figure 2 décrit la méthode de création d'une signature contextualisée au sens de l'invention ;
- la figure 3 décrit une méthode de vérification de signature contextualisée au sens de l'invention
- la figure 4 illustre une méthode de fourniture d'une preuve de signature au sens de l'invention
- la figure 5 illustre un dispositif apte à effectuer une création d'une signature contextualisée.

### 5. Description d'un mode de réalisation

### 5.1. Rappel du principe de l'invention

Comme exposé préalablement, il a été constaté que les solutions actuelles ne permettaient pas réellement d'assurer l'authenticité des signatures manuscrites numérisées pour un acte donné et de plus n'assurent pas la confidentialité des données personnelles (par exemple biométriques) de l'utilisateur. À ce jour, la dématérialisation de la signature correspond couramment à une image. Par conséquent, il est possible pour un commerçant ou toute autre partie mal intentionnée de copier cette signature pour l'apposer à un autre contrat, ou à une modification du contrat, ou se servir de la signature obtenue dans le cadre d'une toute autre opération. Par ailleurs, dans les cas de dématérialisation de signature avec des données biométriques, les systèmes d'acquisition biométrique de signature fournissent l'ensemble des données à un logiciel tiers exécuté sur un système non sécurisé. Ainsi, il est possible que des logiciels de type virus puissent venir récupérer ces informations personnelles et les utilisent à des fins frauduleuses.

L'invention permet de sceller l'association de la signature du signataire et des éléments identifiants le document contractuel concerné au sein de l'équipement sécurisé de manière inaltérable en évitant les failles mentionnées ci-dessus.

De manière générale l'invention se rapporte à la signature en elle-même, à son procédé de création et aux procédés permettant de vérifier la validité de ces signatures. Pour garantir la confiance et la sécurité entre les deux parties, les inventeurs proposent d'utiliser un équipement muni d'un dispositif d'acquisition numérique de la signature, avec ou sans données biométriques, ainsi que d'une enceinte cryptographique lui permettant d'effectuer des algorithmes à base d'une ou de plusieurs clés secrètes et ou asymétriques. Plus particulièrement, les inventeurs se proposent d'utiliser un terminal de paiement par carte et de capture de signature répondant par exemple aux normes ***PCI-PTS.*** Ainsi, il n'est pas nécessaire de disposer d'un équipement tiers pour la capture de la signature et ainsi un seul équipement avec fonctions sécuritaire et de capture de signature est suffisant. Un équipement existant peut être utilisé (s'il comprend un dispositif de capture/enregistrement de signature). Ceci présente plusieurs avantages. Le premier est de ne pas dépendre d'un fournisseur de matériel particulier. Les terminaux de paiement répondant par exemple aux normes ***PCI-PTS*** sont effet disponibles auprès de plusieurs fabricants. La méthode proposée est compatible avec ces terminaux. Le deuxième avantage est de disposer d'un terminal très sécurisé (par rapport aux terminaux des sociétés spécialisées). En effet, les « pad » des sociétés spécialisées sont adaptés à une utilisation conventionnelle. Ces « pads » ne disposent pas des mêmes mesures de sécurisation que, par exemple, celles des terminaux de paiement ***PCI-PTS*** (qui comprennent des mécanismes anti intrusion, des mécanismes d'effacement de mémoire, de clé d'algorithme cryptographique, etc.). Ainsi, à ce jour, il est possible de dialoguer avec un « pad » existant pour par exemple obtenir les clés cryptographiques nécessaires au chiffrement de la signature (pour pouvoir produire de fausses signatures par la suite) ou pour obtenir une numérisation vierge d'une signature existante.

En revanche, l'utilisation par exemple d'un terminal ***PCI-PTS*** garantit que ce type de problème ne puisse pas intervenir. Ainsi, selon l'invention, lors de la demande de signature, l'équipement (par exemple un terminal ***PCI-PTS***) reçoit les données relatives à l'acte (de vente, du contrat, ou de l'abonnement). L'équipement calcule un certificat d'opération relatif à ces données, puis effectue l'acquisition de la signature. Bien entendu, on peut remplacer l'utilisation d'un terminal ***PCI-PTS*** par un autre type de terminal dès lors que ce terminal assure d'une part un sécurisation des données saisies et d'autre pat comprennent des moyens de détection d'intrusion et ou de fraude.

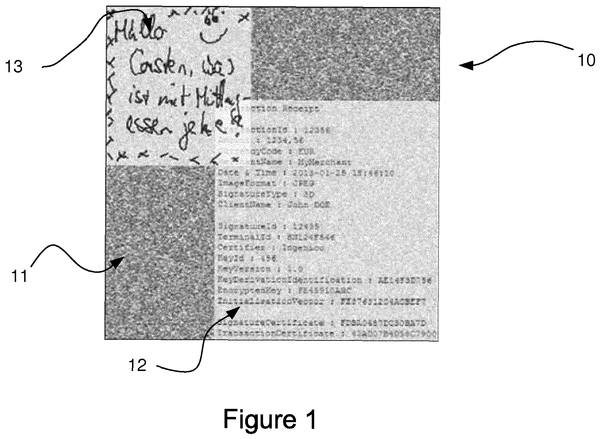

Pour permettre la certification de la signature au point de vente, de contractualisation ou de souscription, le terminal fournit une signature contextualisée de l'acte (d'achat, de contractualisation ou de souscription) sous forme d'image contextualisée (il s'agit d'une image spécifique, comme cela sera montré par la suite). L'énorme avantage est que cette image peut être imprimée et servir de ticket de paiement. Dans certains modes de réalisation, ce ticket de paiement peut également servir de preuve par la suite. Cette signature est décrite en relation avec la figure 1.

Le certificat global 10 (ou signature contextualisée, ou image contextualisée) comprend un aléa 11 (par exemple un fond aléatoire (par exemple de type bruit blanc, communément qualifiée de « neige »)) sur lequel sont superposées au moins deux autres images. La première image 12 comprend les données relatives à l'acte (il s'agit de données de contexte ou données contextuelles), regroupées en un certificat, dit certificat d'opération, calculé par l'équipement et identifiant de manière incontestable cet acte. Cette première image 12 peut également contenir l'ensemble des données nécessaires à la vérification de ce certificat d'opération et le cas échéant des informations légales d'utilisation relatives à la signature contextualisée.

La deuxième image 13 comprend une restitution graphique de la signature.

Enfin, toute ou partie des données reçues ou acquises par l'équipement lors de l'acte ainsi que le certificat d'opération (les données servant à l'identification de l'acte, comme les identifiants, les montants, dates et heures, etc.), les données servant à son contrôle, et optionnellement les données légales d'utilisation peuvent être chiffrées et cachées et ou enregistrées dans la signature contextualisée. Les paramètres biométriques de la signature recueillie peuvent faire partie de ces données ainsi intégrées et ou dissimulées. Ces données sont invisibles (et donc pas représentées sur la figure 1). Elles peuvent se présenter soit sous la forme d'un tatouage numérique soit sous la forme de métadonnées, inclues dans l'image.

L'image contextualisée finale fournie par l'équipement constitue ainsi une signature électronique au sens de la Directive du Parlement européen et du Conseil du 13 décembre 1999 (1999/13/EC).

En effet, l'identité du fournisseur de l'acte, également appelé cocontractant, est garantie par l'utilisation d'un terminal et celle du souscripteur, également appelé signataire, par sa signature, dont il est le seul à détenir les moyens d'élaboration. L'intégrité de la signature contextualisée est garantie par le certificat d'opération et les données de la signature manuscrite qui sont présentés et enregistrées dans l'image. De plus, dans le cas de l'utilisation de données biométriques, la protection de ces données biométriques (qui sont des données personnelles) est respectée, par chiffrement, conformément à la directive européenne 95/46/CE.

De ce fait, l'invention ne nécessite pas un système tiers non contrôlé (c'est un dire un tiers qui n'est pas de confiance), pour produire une signature contextualisée à valeur de signature électronique au sens de la directive 99/13/EC. En revanche, selon l'invention, comme cela est explicité par la suite, la présence d'un tiers de confiance peut être utile pour établir la preuve de la signature en cas de litige.

Cette image est transmise à dispositif requérant ou tiers, si nécessaire, en vue d'une éventuelle impression, d'une sauvegarde ou d'un archivage.

### 5.2. Création de la signature contextualisée.

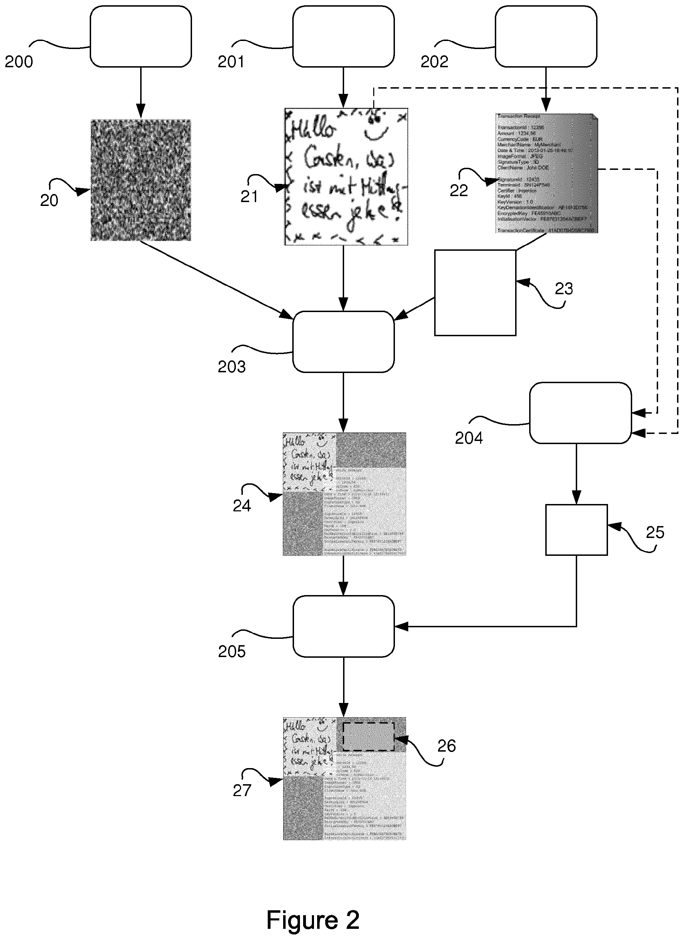

On présente, en relation avec la figure 2, les différentes étapes qui conduisent à la création d'une signature contextualisée au sens de l'invention. On rappelle qu'une signature contextualisée est une signature liée à un acte donné, qu'il s'agisse d'un acte d'achat, de vente, de souscription. Plus généralement, une signature contextualisée est une signature qui se rattache à un contrat ou à un engagement.

Selon l'invention, dans ce mode de réalisation, la création d'une signature contextualisée comprend une étape d'obtention 200 d'une image aléatoire 20 (dans un mode de réalisation particulier, l'image aléatoire est une image à fond blanc sur laquelle est appliqué un bruit monochrome aléatoire, qui est lui-même définit par un aléa représenté sous la forme d'une suite alphanumérique de caractères). Une fois cette image aléatoire obtenue, le procédé comprend une étape d'obtention 201 d'une signature numérisée 21. Cette étape d'obtention comprend soit la saisie de la signature par un utilisateur sur le terminal et/ou l'obtention d'un fichier de signature (fichier SIG contenant des données biométriques). L'étape d'obtention de signature comprend également une étape d'obtention d'une image numérisée et d'autres paramètres, comme par exemple la méthode employée pour réaliser la capture de signature (2D, 3D, taux d'échantillonnage, etc.). Le procédé comprend également une étape d'obtention 202 de données de transaction 22 (ou données transactionnelles). Ces données de transaction correspondent au contexte pour lequel la signature est effectuée. Dans le cas où il s'agit d'un achat, ces données transactionnelles comprennent par exemple l'identifiant du vendeur, la date et l'heure, le montant de la transaction, l'identifiant du client (signataire), le type de signature qui est pratiqué pour valider la transaction.

Cette dernière caractéristique est directement liée au contexte. En effet, en fonction des terminaux, il est possible de capter une signature selon diverse méthodes. Certaines captures peuvent être réalisées uniquement en deux dimensions. D'autres signatures peuvent être captées en trois dimensions. Comme le commerçant (ou le détenteur du terminal) a la connaissance du type de signature qui est capté par le terminal, ce type de signature est, selon l'invention, intégré dans les données transactionnelles. Ceci permet de lier encore plus la signature à un contexte particulier.

L'étape suivant consiste à fusionner 203 l'image aléatoire 20, la signature 21 et une représentation graphique 23 des données transactionnelles 22 en une seule et même image combinée 24. Cette image combinée 24 forme, selon un premier mode de réalisation, la signature contextualisée au sens de l'invention. Selon une caractéristique particulière, la méthode comprend en outre une étape de construction 204 de données cachées 25 et une étape d'insertion 205, sous la forme d'un tatouage numérique 26 (ou de métadonnées), des données cachées dans ladite image combinée 24 pour former une image tatouée 27. Dans ce deuxième mode de réalisation, l'image tatouée 27 forme la signature contextualisée.

Selon une caractéristique particulière, les données cachées 25 comprennent des données biométriques et/ou les données transactionnelles et/ou les données de construction de l'image (par exemple la chaîne numérique représentant l'aléa utilisé). Les données biométriques sont des données représentatives de la signature capturée 21. En fonction de la méthode employée pour capturer les données (par exemple capture de signature en 2D ou capture en 3D, avec ou sans données de pression) les données biométriques comprennent des informations de nature plus ou moins différentes. Ainsi, selon l'invention, les données biométriques sont intégrées à la signature contextualisée. En revanche, pour être conforme aux dispositions législatives en vigueur (à la directive 95/46/CE notamment), ces données biométriques, outre qu'elles sont cachées, ne sont pas intégrées en clair dans la signature. Au contraire, les données biométriques sont chiffrées préalablement à leur intégration, sous une forme cachée, dans la signature contextualisée. Plus spécifiquement, les données cachées sont préalablement chiffrées en utilisant le matériel cryptographique du terminal (par exemple du terminal de paiement lorsque ce type de terminal est utilisé). Comme le terminal est protégé et sécurisé, on assure ainsi que seul le détenteur du matériel cryptographique du terminal (le détenteur du matériel cryptographique est par exemple le fabriquant du terminal) est en mesure de déchiffrer ces données chiffrées et de répondre aux besoins d'authentifications qui peuvent survenir à l'issue de la signature.

### 5.3. Détermination de la preuve de l'acte

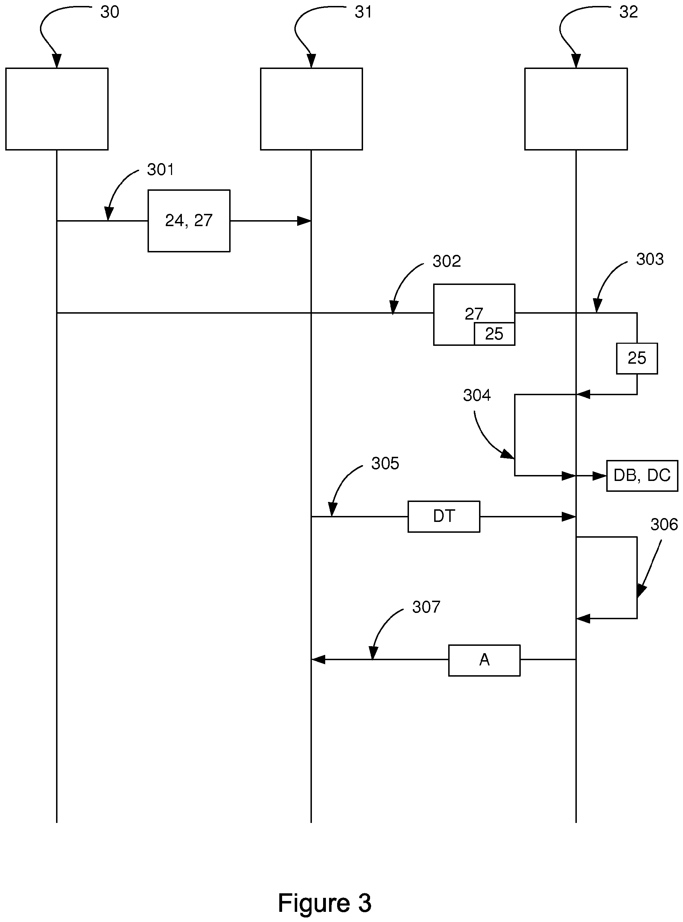

Après que la signature contextualisée a été créée, deux situations peuvent se produire. La première situation est la requête, transmise par un établissement tiers, requérant, tendant à obtenir la preuve de la signature par le contractant (ce peut être par exemple une preuve de paiement requise par une banque). Selon l'invention, cette requête est satisfaite par la transmission d'une assertion de validation de la signature contextualisée. La méthode de délivrance de cette assertion est décrite en relation avec la figure 3.

Deux cas de figure peuvent se produire dans cette première situation. Dans un premier cas de figure 301, le cocontractant 30 (par exemple le commerçant) utilise directement le fichier d'image sécurisé (il s'agit de la signature contextualisée 24, 27) en sa possession. Il peut dans ce cas la transmettre au requérant 31 (par exemple à un établissement financier qui souhaite obtenir une preuve de l'achat ou de l'acte). Dans un deuxième cas de figure, si l'établissement financier 31 souhaite avoir la preuve de l'authenticité de cette signature contextualisée 27, le cocontractant 30, qui dispose de cette signature contextualisée 27, la transmet 302 à un tiers de confiance 32 chargée de l'authentifier. Ce tiers de confiance 32 va, à partir de cette seule signature contextualiser 27, effectuer les opérations nécessaire à la recréation de la signature. Dans ce mode de réalisation, on considère que le tiers de confiance 32 est en possession du matériel cryptographique nécessaire au déchiffrage des données cachées 25 de la signature contextualisée 27 (par exemple le tiers de confiance est en possession de la clé privée permettant de déchiffrer les données cachées 25). Ce tiers de confiance 32 peut être le constructeur du terminal qui a été utilisé pour construire la signature contextualisée.

Dans ce mode de réalisation de l'invention, l'étape suivante est une étape d'extraction 303 des données cachée 25 suivie d'une étape de déchiffrement 304 des données cachées 25 délivrant des données biométriques et des données contextuelles (DB-DC). Le requérant 31 transmet 305 pour sa part les données transactionnelles (DT) en sa possession. Au moins certaines des données (DB-DC) sont ensuite comparées 306 à au moins certaines des données transactionnelles (DT) et une assertion A est transmise 307 lorsque les données concordent. Alternativement, le tiers de confiance 32 peut recevoir les données transactionnelles DT de la part du cocontractant 31 (si celui-ci les possèdent). Alternativement le tiers de confiance 32 peut déjà avoir une copie des données transactionnelles DT. L'invention concerne également les programmes informatiques et les dispositifs permettant de mettre en oeuvre le procédé venant d'être décrit.

### 5.4. Vérification de la validité de la signature contextualisée

La deuxième situation est celle dans laquelle il est nécessaire de prouver qu'une signature n'a pas été forgée artificiellement, en dehors de la méthode de création de la signature contextualisée et/ou que les données transactionnelles n'ont pas été modifiées.

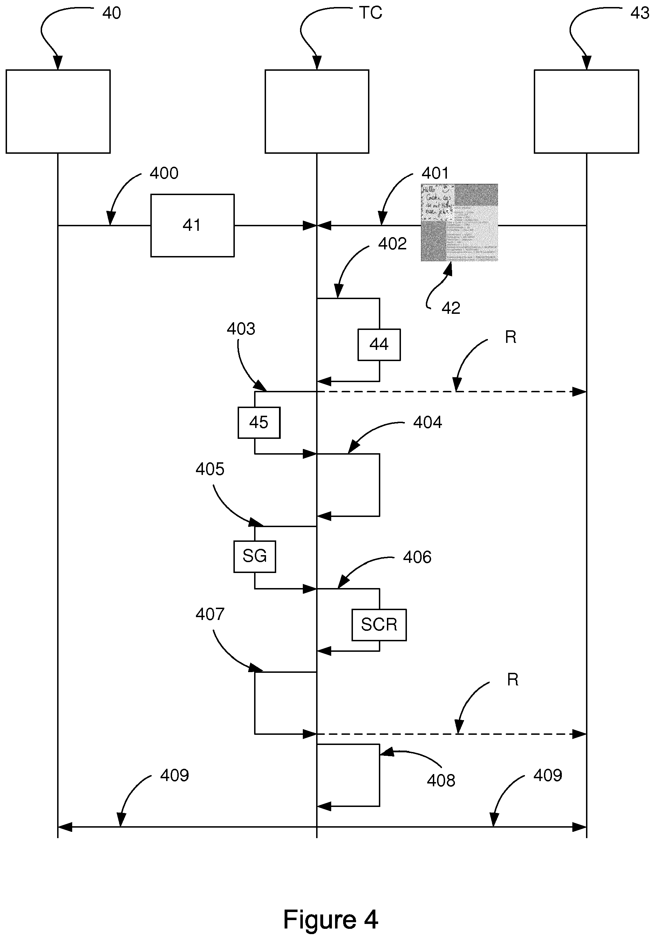

La méthode de vérification est décrite en relation avec la figure 4.

Cette méthode comprend :
- une étape de réception (400), en provenance d'un dépositaire (40), par un tiers de confiance (TC) de données transactionnelles (41) supposées à l'origine d'une signature contextualisée (42) dont on souhaite vérifier l'authenticité (le dépositaire peut être le commerçant, l'entité ayant la qualité de cocontractant ou un tiers de confiance chez qui les données transactionnelles sont conservées) ;
- une étape de réception (401), en provenance d'un dépositaire (43), de la signature contextualisée à vérifier (42). Il peut s'agir du même dépositaire que précédemment, sans toutefois que cela soit obligatoire ;
- une étape de recherche (402), au sein de la signature contextualisée à vérifier (42), d'un tatouage numérique ou de métadonnées (44), délivrant une donnée de présence de tatouage numérique ou de métadonnées ; et
   - lorsque ladite donnée de présence d'un tatouage numérique est positive, une étape d'obtention (403) de données cachées (45) ;
   - lorsque ladite donnée de présence d'un tatouage numérique est négative, une étape de rejet (R) de ladite signature contextualisée ;
- une étape de contrôle (404) des données cachées (45) ; et lorsque certaines desdites données cachées correspondent à au moins certaines desdites données transactionnelles (41) correspondantes,
   - une étape de calcul 405 d'une signature, comprenant une étape de déchiffrement des données biométriques, une étape de construction, à partir des données biométriques comprises dans les données cachées déchiffrées, d'une signature (SG) ;
   - une étape de construction 406, à partir desdites données précédentes d'une signature contextualisée de référence (SCR). La construction, comprend, le cas échéant, la mise ne oeuvre de l'aléa compris dans les données cachées ;
   - une étape de comparaison de ladite signature de référence SCR et de ladite signature contextualisée 42 ;
   - lorsque les deux signatures sont différentes, une étape de rejet (R) de la signature contextualisée ;
   - lorsque les deux signatures sont identiques, une étape de vérification 408 de l'authenticité des données biométriques (cette vérification est effectuée par d'autres moyens non décrits ici) et lorsque les données biométriques sont bonnes, une étape (409) de transmission d'une information d'authenticité de la signature.

Ainsi, comme cela apparaît clairement à la lecture précédente, la signature contextualisée comprend à la fois une signature manuscrite visible et identifiable directement par un utilisateur et les données nécessaire à la reconstruction de cette signature pour contrôle ultérieur de sa propre authenticité. Une analogie lointaine peut être faite avec une cellule vivante qui comprend à la fois ses caractères propres et les moyens de se dupliquer pour obtenir une cellule identique. L'invention concerne également les programmes informatiques et les dispositifs permettant de mettre en oeuvre le procédé venant d'être décrit.

### 5.5. Contenu des données cachées

Dans un mode de réalisation purement illustratif, les données cachées comprennent les enregistrements de données suivants :
- au moins une donnée d'identification du signataire;
- au moins une donnée d'identification du cocontractant (par exemple le commerçant, l'entité émettrice du contrat ou de l'acte) ;
- au moins une donnée de datation de la signature ;
- au moins une donnée d'identification de la signature ;
- Une donnée d'identification d'un tiers de confiance,
- Une donnée d'identification d'une clé de chiffrement,
- Une donnée d'identification d'une version de clé ;
- Une donnée d'identification d'une dérivation de clé ;
- Une matérialisation d'un aléa (il s'agit par exemple d'une suite alphanumérique d'une longueur prédéterminée ;
- Des données biométriques chiffrées.

Bien entendu, il est possible de compléter ou remplacer ces données cachées par d'autres données qui peuvent avoir de la pertinence en fonction d'un contexte donné.

### 5.6. Dispositif de création de signature contextualisée

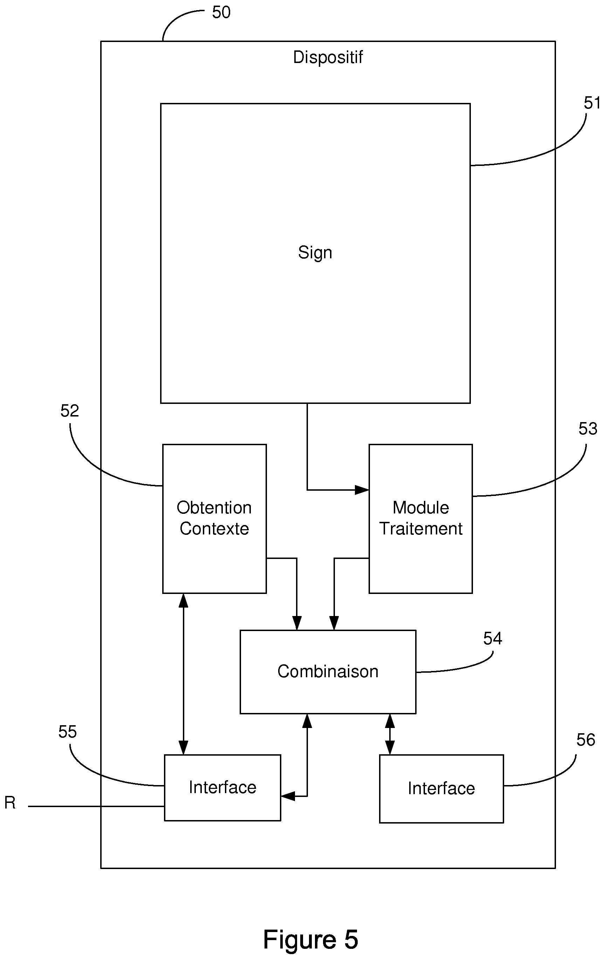

On décrit, en relation avec la figure 5, un dispositif 50 de création d'une signature contextualisée au sens de l'invention. Un tel dispositif comprend des moyens de signature capture 51. De tels moyens sont par exemple un écran tactile apte à enregistrer une signature. Il peut également s'agir d'un pavé de signature dissocié de l'affichage de la signature saisie.

Quoi qu'il en soit, ce dispositif comprend :
- des moyens d'obtention 52 d'au moins une donnée relative à un contexte. Ces moyens peuvent se présenter sous la forme d'un module logiciel ou matériel ou encore d'un module réseau de réception d'information en provenance d'un autre dispositif. Il peut également s'agir de tous ces moyens à la fois pour permettre de combiner des données provenant de plusieurs sources.
- des moyens de saisie d'une signature 51, délivrant une signature numérisée, soit ces moyens intègrent des moyens d'obtention de données biométriques (c'est-à-dire qu'à partir de la signature effectuée, les données biométriques sont calculées par ces moyens de saisie de signature), soit ces moyens sont uniquement chargés de la capture des données, lesquelles étant ensuite traitées et analysées par un autre module 53, pour produire les données biométriques.
- des moyens de combinaison 54 de ladite signature numérisée et de ladite au moins une donnée de contexte, délivrant une signature contextualisée. Ces moyens de combinaisons, qui sont intégrés au dispositif comprennent par exemple des mémoires sécurisées comprenant des clés de chiffrement, des moyens de génération d'aléa quand cela est nécessaire, des moyens de chiffrement, des moyens de formatage de données, etc. Ces moyens peuvent être des modules logiciels mis en oeuvre par un processeur, des modules matériels, par exemple des modules matériels programmables, ou encore un processeur spécialisé effectuant l'ensemble de ces tâches.

Par ailleurs, le dispositif comprend en outre des interfaces (55, 56), par exemple des interfaces réseau R permettant de transmettre et de recevoir des données informatiques à d'autres dispositifs, tels que des serveurs, pour permettre d'une part la réception de requête de fourniture de signatures contextualisées, la transmission de telle signatures des contextes seuls, etc.

## Revendications

1. Procédé de création de signature numérisée contextualisée, représentative d'une signature effectuée par un utilisateur sur un dispositif de saisie de signature pour un acte donné, procédé **caractérisé en ce qu'**il comprend :
- une étape d'obtention d'au moins une donnée relative à un contexte, comprenant une obtention d'une donnée aléatoire représentative d'un fond d'image aléatoirement calculé ;
- une étape d'obtention d'une signature, délivrant une signature numérisée ;
- une étape de combinaison de ladite signature numérisée et de ladite au moins une donnée de contexte, délivrant une signature contextualisée.

2. Procédé selon la revendication 1, **caractérisé en ce que** ladite étape d'obtention de ladite donnée représentative d'un fond d'image aléatoire comprend une étape d'application, sur une image vierge, d'un bruit aléatoire.

3. Procédé, selon la revendication 1, **caractérisé en ce que** ladite étape d'obtention de signature comprend en outre une étape d'obtention d'au moins une donnée biométrique dudit utilisateur.

4. Procédé, selon la revendication 1, **caractérisé en ce qu'**il comprend en outre :
- une étape de calcul, à l'aide de ladite au moins une donnée relative à un contexte et de ladite au moins une signature numérisée, d'au moins une donnée cachée ;
- une étape d'insertion, au sein de ladite signature contextualisée, de ladite au moins une donnée cachée.

5. Procédé selon la revendication 4, **caractérisé en ce que** ladite étape d'insertion au sein de ladite signature contextualisée, de ladite au moins une donnée cachée, comprend une étape de calcul d'un tatouage numérique à partir de ladite au moins une donnée cachée et **en ce que** ladite étape d'insertion de ladite au moins une donnée cachée consiste en l'application, au sein de ladite signature contextualisée, dudit tatouage numérique.

6. Procédé selon la revendication 4, **caractérisé en ce que** ladite étape d'insertion au sein de ladite signature contextualisée consiste à insérer ladite au moins une donnée cachée, au sein de métadonnées de ladite signature contextualisée.

7. Dispositif de création de signature numérisée contextualisée, représentative d'une signature effectuée par un utilisateur **caractérisé en ce qu'**il comprend :
- des moyens d'obtention d'au moins une donnée relative à un contexte, comprenant une obtention d'une donnée aléatoire représentative d'un fond d'image aléatoirement calculé ;
- des moyens d'obtention d'une signature, délivrant une signature numérisée ;
- des moyens de combinaison de ladite signature numérisée et de ladite au moins une donnée de contexte, délivrant une signature contextualisée.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé de détermination selon l'une quelconque des revendications 1 à 6.

## Patentansprüche

1. Verfahren zur Erzeugung einer kontextualen digitalisierten Signatur, die für eine Signatur repräsentativ ist, die von einem Benutzer auf einer Signatur-Eingabevorrichtung für eine gegebene Urkunde geleistet wird, wobei das Verfahren **dadurch gekennzeichnet ist, dass** es umfasst:
- einen Schritt des Erhalts mindestens eines mit einem Kontext verbundenen Datums, umfassend einen Erhalt eines zufälligen Datums, das für ein zufällig berechnetes Hintergrundbild repräsentativ ist;
- einen Schritt des Erhalts einer Signatur, der eine digitalisierte Signatur liefert;
- einen Schritt der Kombination der digitalisierten Signatur und des mindestens einen Kontextdatums, der eine kontextualisierte Signatur liefert.

2. Verfahren nach Anspruch 1, **dadurch gekennzeichnet, dass** der Schritt des Erhalts des für ein zufälliges Hintergrundbild repräsentativen Datums einen Schritt des Anwendens eines zufälligen Geräusches an einem neuen Bild umfasst.

3. Verfahren nach Anspruch 1, **dadurch gekennzeichnet, dass** der Schritt des Erhalts einer Signatur ferner einen Schritt des Erhalts mindestens eines biometrischen Datums des Benutzers umfasst.

4. Verfahren nach Anspruch 1, **dadurch gekennzeichnet, dass** es ferner umfasst:
- einen Schritt der Berechnung mindestens eines verdeckten Datums mit Hilfe des mindestens einen mit einem Kontext verbundenen Datums und der mindestens einen digitalisierten Signatur;
- einen Schritt des Einsetzens des mindestens einen verdeckten Datums in die kontextualisierte Signatur.

5. Verfahren nach Anspruch 4, **dadurch gekennzeichnet, dass** der Schritt des Einsetzens des mindestens einen verdeckten Datums in die kontextualisierte Signatur einen Schritt der Berechnung einer digitalen Tätowierung aus dem mindestens einen verdeckten Datum umfasst, und dass der Schritt des Einsetzens des mindestens einen verdeckten Datums in der Anwendung der digitalen Tätowierung in der kontextualisierten Signatur besteht.

6. Verfahren nach Anspruch 4, **dadurch gekennzeichnet, dass** der Schritt des Einsetzens der kontextualisierten Signatur darin besteht, das mindestens eine verdeckte Datum in Metadaten der kontextualisierten Signatur einzusetzen.

7. Vorrichtung zur Erzeugung einer kontextualisierten digitalisierten Signatur, die für eine Signatur repräsentativ ist, die von einem Benutzer geleistet wird, **dadurch gekennzeichnet, dass** sie umfasst:
- Mittel zum Erhalt mindestens eines mit einem Kontext verbundenen Datums, umfassend einen Erhalt eines zufälligen Datums, das für ein zufällig berechnetes Hintergrundbild repräsentativ ist;
- Mittel zum Erhalt einer Signatur, die eine digitalisierte Signatur liefern;
- Mittel zur Kombination der digitalisierten Signatur und des mindestens einen Kontextdatums, die eine kontextualisierte Signatur liefern.

8. Computerprogrammprodukt, das von einem Kommunikationsnetz heruntergeladen und/oder auf einem von einem Computer lesbaren Träger gespeichert und/oder von einem Mikroprozessor ausgeführt werden kann, **dadurch gekennzeichnet, dass** es Programmcodebefehle für den Einsatz des Bestimmungsverfahrens nach einem der Ansprüche 1 bis 6 umfasst.

## Claims

1. A method for creating a contextualized, digitized signature representing a signature made by a user on a device for entering signatures for a given deed, wherein the method comprises:
- a step of obtaining at least one piece of data pertaining to a context, comprising obtaining a piece of random data representing a randomly computed background image;
- a step of obtaining the signature from the user, delivering a digitized signature; and
- a step of combining said digitized signature and said at least one piece of context data delivering a contextualized signature.

2. The method according to claim 1, **characterized in that** said step of obtaining said piece of random data representing the random background image comprises a step of applying a random noise to an original image.

3. The method according to claim 1, **characterized in that** said step of obtaining a signature furthermore comprises a step of obtaining at least one piece of biometric data of said user.

4. The method according to claim 1, **characterized in that** the method further comprises:
- a step of computing at least one piece of concealed data by using said at least one piece of data pertaining to a context and said at least one digitized signature;
- a step of inserting said at least one piece of concealed data into said contextualized signature.

5. The method according to claim 4, **characterized in that** said step of inserting said at least one piece of concealed data into said contextualized signature comprises a step of computing a digital watermark from said at least one piece of concealed data, and said step of inserting said at least one piece of concealed data comprises applying, within said contextualized signature, said digital watermark.

6. The method according to claim 4, **characterized in that** said step of inserting into said contextualized signature comprises inserting said at least one piece of concealed data into metadata of said contextualized signature.

7. A device for creating a contextualized digital signature representing a signature made by a user, **characterized in that** the device comprises:
- means for obtaining at least one piece of data relating to a context, comprising obtaining a piece of random data representing a randomly computed background image;
- means for obtaining a signature, delivering a digitized signature;
- means for combining said digitized signature and said at least one piece of context data, delivering the contextualized signature.

8. A computer program product downloadable from a communication network and/or stored on a computer-readable medium and executable by a processor, **characterized in that** the program product comprises program code instructions, which when executed by a processor implement a method according to any of claims 1 to 6.
